# EUROPÄISCHE PATENTANMELDUNG

(11) **EP 1 005 246 A2**
(43) Veröffentlichungstag der Anmeldung: **31.05.2000**
(21) Anmeldenummer: 99440322.8
(22) Anmeldetag: 19.11.1999
(51) Int. Cl.: H04Q 7/38

(54) **Verfahren und Komponenten zum Weiterreichen von Funkverbindungen in TDMA-basierenden schnurlosen Kommunikationssystemen**

(30) Priorität: 26.11.1998 DE 19854618
(71) Anmelder: ALCATEL, 75088 Paris (FR)
(72) Erfinder: Sperber, Christoph, 75175 Pforzheim (DE); Kühn, Edgar, Dr., 70563 Stuttgart (DE); Barth, Ulrich, 70825 Korntal-Münchingen (DE)
(74) Vertreter: Brose, Gerhard, Dipl.-Ing.

(57) **Zusammenfassung**

Bei einem Verfahren zur Verbindungsaufnahme in TDMA-basierenden Kommunikationssystemen zwischen einer Mobilstation (CTS-MS), die in Funkverbindung mit einer (ersten) Basisstation (CTS-FP1) eines (ersten) schnurlosen Telefonsystems (CTS1) steht, mit einer anderen (zweiten) Basisstation (CTS-FP2) des gleichen oder eines anderen (zweiten) schnurlosen Telefonsystems (CTS2) versucht die Mobilstation (CTS-MS) entweder, während sie mit der ersten Basisstation (CTS-FP1) auf einem Zeitschlitz (TS1) in Funkverbindung steht, auf mindestens einem anderen Zeitschlitz (TS2) eine Funkverbindung mit der zweiten Basisstation (CTS-FP2) herzustellen. Oder die Mobilstation (CTS-MS) nutzt zur Verbindungsaufnahme mit der zweiten Basisstation (CTS-FP2) mindestens einen TDMA-Rahmen (f1; f2; f3) des Interleaving-Schemas, wenn eine Information zwischen Mobilstation (CTS-MS) und Basisstation (CTS-FP1, CTS-FP2)) über mehrere TDMA-Rahmen (f1 bis f8) des einen Zeitschlitzes (TS1) nach einem bestimmten Interleaving-Schema übertragen wird.

## Beschreibung

Die Erfindung betrifft ein Verfahren sowie entsprechende Komponenten zur Verbindungsaufnahme in TDMA-basierenden Kommunikationssystemen zwischen einer Mobilstation, die in Funkverbindung mit einer ersten Basisstation eines ersten schnurlosen Telefonsystems steht, mit einer anderen zweiten Basisstation des gleichen oder eines anderen zweiten schnurlosen Telefonsystems.

TDMA (time division multiple access) bedeutet den Zugriff auf einen Zeitmultiplex-Funkkanal durch zeitselektive Schaltungstechnik, mit der lediglich das im entsprechenden Zeitfenster oder Zeitschlitz (TS: time slot) liegende Funksignal ausgekoppelt wird. Zeitlich aufeinander folgende Zeitschlitze bilden einen TDMA-Rahmen.

Im Mobilfunknetz GSM (global system for mobile communications) wird ein Weiterreichen (Handover) der Mobilstation während des Gespräches von einer Funkzelle zu einer anderen Funkzelle von der in der Systemhierarchie auf höherer Ebene befindlichen Netzwerkseite gesteuert, basierend auf Daten, die ihr von der Mobilstation mitgeteilt werden.

Auch in einem Netzwerk von schnurlosen Telefonsystemen (CTS: cordless telephone systems), bestehend aus mehreren Funkzellen mit jeweils einer Basisstation (CTS-FP: cordless telephone system-fixed part), die über eine Nebenstellenanlage (PABX: private automatic branch exchange) miteinander verbunden sind, ist Mobilität für registrierte Mobilstationen (CTS-MS: cordless telephone system-mobil station) und damit ein Übergang der Mobilstation zwischen Funkzellen des gleichen CTS-Netwerks (sog. re-selection außerhalb einer Gesprächsverbindung oder sog. Handover innerhalb einer Gesprächsverbindung) wünschenswert. Zur Erzielung einer hohen Gesprächsqualität ist ein nahtloser Übergang angestrebt.

Allerdings existiert im Gegensatz zum GSM bei CTS-Systemen, die zusammen ein Netzwerk von verbundenen schnurlosen Telefonsystemen bilden, keine höhere Ebene, die das Weiterreichen von Funkverbindungen steuern könnte.

Es ist daher die Aufgabe der vorliegenden Erfindung, ein Verfahren der eingangs genannten Art derart weiterzubilden, daß die Mobilstation in der Lage ist, bei Bedarf selbst eine Verbindung mit einer anderen Basisstation aufzunehmen, sowie entsprechende Komponenten bereitzustellen.

Die oben genannte Aufgabe wird erfindungsgemäß durch ein Verfahren nach Anspruch 1, durch eine Mobilstation nach Anspruch 8, durch eine Basisstation nach Anspruch 9 und durch ein schnurloses Telefonsystem nach Anspruch 10 gelöst.

Demnach versucht die Mobilstation, während sie mit der ersten Basisstation auf einem Zeitschlitz in Funkverbindung steht, auf dem gleichen oder mindestens einem anderen Zeitschlitz eine Funkverbindung mit der zweiten Basisstation herzustellen.

Der Erfindung liegt die Erkenntnis zugrunde, daß aufgrund der fehlenden höheren Hirarchieebene beim Handover in eine Nachbarzelle von der Mobilstation selbst die Bereitstellung der Funk-Ressource (radio resource) anzustoßen, ein Übertragungskanal (TCH: traffic channel) zur neuen Basisstation aufzubauen und, wenn möglich, die Verbindung zur alten Basisstation abzubauen ist. Die Notwendigkeit für ein Handover in eine neue Zelle soll von der betroffenen Mobilstation selbst entschieden werden. Zusätzlich kann die Auswahl der neuen Zelle, falls mehrere benachbarte Zellen existieren, sowie die Ausführung des Handover von ihr angestoßen und gesteuert werden.

Indem bei einem laufenden Gespräch ein oder mehrere Zeitschlitze innerhalb von aufeinanderfolgenden TDMA-Rahmen von der betroffenen Mobilstation belegt werden, kann auf diesem bzw. diesen Zeitschlitzen eine Handover-Prozedur ganz oder teilweise durchgeführt werden, während auf einem anderen Zeitschlitz das laufende Gespräch geführt wird.

Wenn eine Information zwischen Mobilstation und Basisstation über mehrere TDMA-Rahmen eines Zeitschlitzes nach einem bestimmten Verschachtelungsschema (Interleaving-Schema) übertragen wird, ist es vorteilhaft, wenn die Mobilstation zur Verbindungsaufnahme mit der zweiten Basisstation mindestens einen TDMA-Rahmen des Interleaving-Schemas von der Verbindung zur ersten Basisstation CTS-FP1 nutzt, d.h. aus dem benutzten Kanal (z.B. Zeitschlitz TS1 im Interleaving-Schema) mindestens einen Rahmen für eine beschränkte Zeitdauer stiehlt.

Das hat den besonderen Vorteil, daß die Verbindungsaufnahme zur neuen zweiten Basisstation auch dann erfolgen kann, wenn die Mobilstation zuvor auf einem anderen Zeitschlitz (z.B. TS2) eine Verbindungsaufnahme mit der zweiten Basisstation (CTS-FP2) vergeblich herzustellen versucht hat.

Standardmäßig wird in GSM jede zu übertragende Information, sowohl in Abwärtsrichtung (downlink) als auch in Aufwärtsrichtung (uplink), über vier oder acht TDMA-Rahmen verteilt und nach einem bestimmten Verschachtelungsschema blockweise übertragen. Dieses Verschachteln (Interleaving) erfolgt derart, daß auch dann, wenn von den TDMA-Rahmen eines Interleaving-Blocks einzelne (z.B. drei von acht) TDMA-Rahmen nicht empfangen werden, die übertragene Information trotzdem vollständig rekonstruiert werden kann.

Erfindungsgemäß werden TDMA-Rahmen, die gerade nicht zwingend zur Übertragung von Information erforderlich sind, aus den Interleaving-Blöcken "gestohlen" und benutzt, um während eines laufenden Gesprächs parallel ein Weiterrreichen (Handover-Prozedur) zu einer Nachbarzelle ganz oder teilweise durchführen zu können. So kann die Mobilstation über diese gestohlenen TDMA-Rahmen des aktuellen Gesprächskanals (TCH) eine neue Funk-Ressource (radio resource) auffinden. Diese bis zu drei gestohlenen TDMA-Rahmen können auch über mehrere Blöcke akkumuliert werden. Wird von der Mobilstation entschieden, daß ein Handover stattfinden soll, wird das laufende Gespräch zunächst nicht unterbrochen und der Handover-Vorgang über gestohlene TDMA-Rahmen durchgeführt. Die vorteilhafte Verwendung von speziellen Sequenzen für die Suche eines neuen CTS und die sich anschließende Registrierung der Mobilstation ermöglichen eine zeitliche Minimierung dieses Vorgangs.

Vorzugsweise erfolgt die Verbindungsaufnahme über gestohlene TDMA-Rahmen erst dann, wenn die Mobilstation zuvor auf einem anderen Zeitschlitz eine Verbindungsaufnahme mit der zweiten Basisstation vergeblich herzustellen versucht hat. Das erfindungsgemäße Verfahren kann sowohl bei einem System ohne Rundspruchsignalisierung (sog. CTS mit BCCH-losem Protokoll) als auch bei Verwendung einer Rundspruchsignalisierung (auf dem sog. broadcast channel BCCH) angewendet werden. Außerdem können diese Maßnahmen auf Vollraten-Übertragung (full rate traffic) wie auch auf Halbraten-Übertragung (half rate traffic) angewendet werden.

Die beiden beschriebenen Verfahren ermöglichen insbesondere die Durchführung von nahtlosen Handover-Prozeduren in einem CTS-Netzwerk, ohne daß hierfür eine übergeordnete zentrale Einrichtung für Mobilitätsverwaltung erforderlich ist. Das oder die ausgewählten Verfahren können sequentiell und/oder im Zeitmultiplex-Verfahren für mehrere benachbarte CTS angewendet werden.

Von Vorteil ist es, wenn die Anzahl der für die Verbindungsaufnahme nutzbaren TDMA-Rahmen nicht bereits fest vorgegeben ist, sondern z.B. von der Übertragungsqualität der zwischen Mobilstation und erster Basisstation bestehenden Funkverbindung abhängt. So läßt sich sicherstellen, daß bei einer Verbindung mit schlechter Übertragungsqualität, bei der alle TDMA-Rahmen für die Übertragung verwendet werden müssen, nicht durch Stehlen eines TDMA-Rahmens diese Verbindung zusammenbricht. Je besser die Übertragungsqualität, desto mehr TDMA-Rahmen können aus einem Interleaving-Block gestohlen werden.

Die Mobilstation wird versuchen, beim Weiterreichen und Ortswechsel (Handover bzw. Roaming) die Verbindung zu einer zweiten benachbarten Basisstation zwecks Signalisierens aufzunehmen. Die Mobilstation kann nach einem stattgefundenen Verbindungswechsel auf die zweite Basisstation erneut Verbindung zu der ersten Basisstation aufnehmen, um sich abzumelden bzw. rückzumelden. Wenn die Mobilstation die Handover-Prozedur teilweise oder ganz vollzogen hat, kann sie diese Information, optional unter Angabe der Identität der neuen Basisstation, der alten Basisstation mitteilen.

Die Erfindung betrifft in einem weiteren Aspekt auch eine Mobilstation und eine Basisstation mit einem Programmodul zum Durchführen des vorgeschlagenen Verfahrens sowie ein schnurloses Telefonsystem mit mindestens einer solchen Mobilstation und mit mindestens einer solchen Basisstation.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebene Ausführungsformen sind nicht als abschließende Aufzählung zu verstehen, sondern haben vielmehr beispielhaften Charakter für die Schilderung der Erfindung.

Es zeigen:
Fig. 1 schematisch zwei schnurlose Telefonsysteme sowie eine Mobilstation, die von einem ins andere schnurlose Telefonsystem wechselt;
Fig. 2 schematisch das "Interleaving"-Schema für die Funkverbindung zwischen Mobilstation und Basisstation; und
Fig. 3 ein Ablaufdiagramm für ein in der Mobilstation vorgesehenes Softwaremodul.

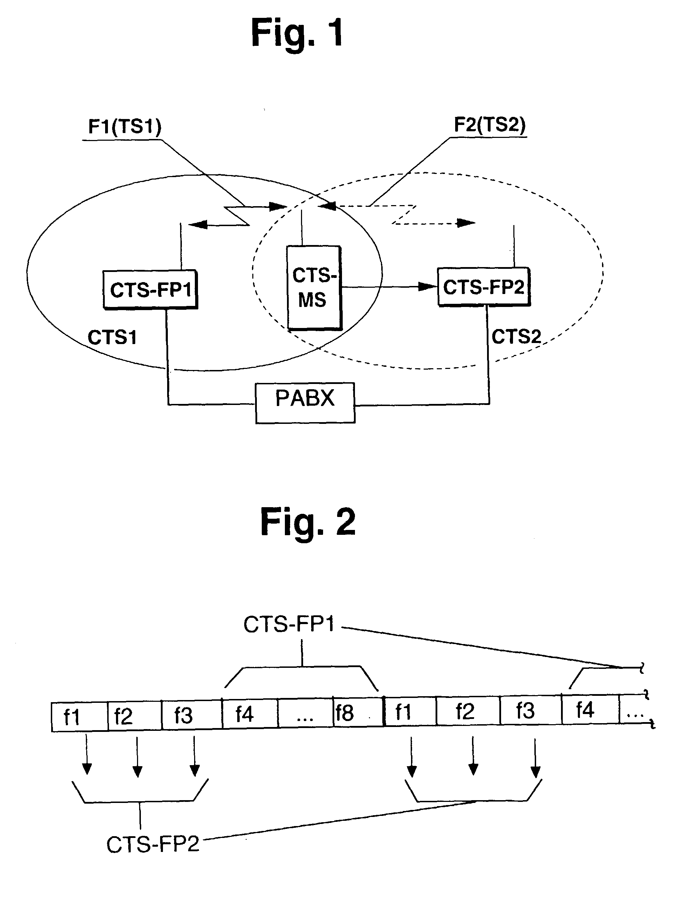

In Fig. 1 sind zwei benachbarte schnurlose Telefonsysteme CTS1, CTS2 mit jeweils einer Basisstation CTS-FP1 bzw. CTS-FP2 gezeigt, deren ellipsenförmig dargestellten Funkzellen sich überlappen. Eine Mobilstation CTS-MS, die über einen Zeitschlitz TS1 in Funkverbindung F1 mit der einen ersten Basissstation CTS-FP1 steht, soll beim Handover in die Nachbarzelle selbst die Bereitstellung einer Funk-Ressource bei der neuen zweiten Basisstation CTS-FP2 anstoßen, einen Übertragungskanal zur neuen Basisstation CTS-FP2 aufbauen und, wenn möglich, selbst die Verbindung zur alten Basisstation CTS-FP1 abbauen. Die Notwendigkeit für ein Handover in eine neue Zelle kann dabei von der Mobilstation CTS-MS selbst oder vom CTS-FP entschieden werden. Im letzteren Fall muß die CTS-MS ihre Daten über die Funkqualität an den CTS-FP senden.

Die Mobilstation CTS-MS versucht, während sie mit der ersten Basisstation CTS-FP1 auf dem Zeitschlitz TS1 in Funkverbindung F1 steht, auf einem anderen Zeitschlitz TS2 eine Funkverbindung F2 mit der zweiten Basisstation CTS-FP2 herzustellen. Auf dem Zeitschlitz TS2 kann eine Handover-Prozedur ganz oder teilweise versucht werden, während auf dem Zeitschlitz TS1 das laufende Gespräch geführt wird.

Muß jedoch die Mobilstation CTS-MS zur Verbindungsaufnahme mit der zweiten Basisstation CTS-FP2 denselben Kanal (z.B. Zeitschlitz TS1) wie für das laufende Gespräch benutzen, kann die Mobilstation CTS-MS für die Zeitdauer der Verbindungsaufnahme mit der zweiten Basisstation CTS-FP2 mindestens einen TDMA-Rahmen des Interleaving-Schemas stehlen und für die Signalisierung nutzen.

Für den TDMA-Funkkanal im Zeitschlitz TS1 ist ein Interleaving-Schema mit zwei mal acht TDMA-Rahmen f1 bis f8 in Fig. 2 dargestellt. Es sei angenommen, daß von den jeweils acht TDMA-Rahmen z.B. die jeweils drei ersten TDMA-Rahmen f1, f2 und f3 gestohlen werden können und daß die Funkverbindung mit der ersten Basisstation CTS-FP1 weiterhin über die anderen TDMA-Rahmen aufrecht erhalten werden kann. Über die gestohlenen TDMA-Rahmen nimmt die Mobilstation CTS-MS bei Bedarf, z.B. bei abnehmender Gesprächsqualität, Verbindung zur zweiten Basisstation CTS-FP2 auf, wie es in Fig. 2 über die Zuordnung der Rahmen f1 bis f3 zur neuen Funkverbindung mit der zweiten Basisstation CTS-FP2 angedeutet ist.

Diese für das Beispiel einer GSM-CTS beschriebenen Maßnahmen lassen sich allgemein auf TDMA-Systeme anwenden.

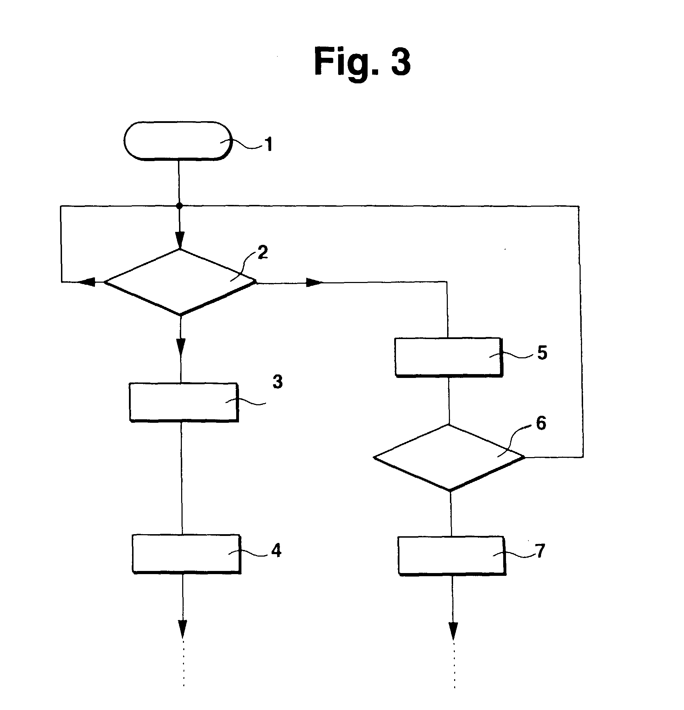

In Fig. 3 ist beispielhaft ein Ablaufdiagramm für das erfindungsgemäße Verfahren gezeigt, wobei zum einen der Fall für BCCH-loses Protokoll und zum anderen der Fall für die Verwendung eines BCCH dargestellt sind. Es sei angenommen, daß die Verbindung zur ersten Basisstation CTS-FP1 auf dem Zeitschlitz TS1 erfolgt. Nach dem Programmstart in Schritt 1 wird in Schritt 2 fortlaufend die Übertragungsqualität der Verbindung zwischen Mobilstation CTS-MS und erster Basisstation CTS-FP1 überprüft. Sofern sie ausreichend gut ist, besteht kein Handlungsbedarf für einen Wechsel der Funkverbindung, und das Programm bleibt in einer Warteschleife. Ist die Übertragungsqualität hingegen nicht mehr ausreichend, wird die Mobilstation CTS-MS eine Verbindung zu einer anderen, zweiten Basisstation CTS-FP2 aufnehmen. Der Zeitschlitz, auf dem diese Verbindungsaufnahme erfolgt, ist durch die Basisstation CTS-FP2 vorgegeben. Falls kein BCCH eingerichtet ist, erfolgt die Verbindungsaufnahme auf einem anderen Zeitschlitz, z.B. auf Zeitschlitz TS2. Dann verzweigt das Programm von Schritt 2 nach Schritt 3 und 4. Die Verbindungsaufnahme erfolgt parallel zur laufenden Verbindung zur ersten Basisstation CTS-FP1.

Muß die Verbindungsaufnahme zur zweiten Basisstation CTS-FP2 auf demselben Zeitschlitz TS1 wie die laufende Verbindung zur ersten Basisstation CTS-FP1 erfolgen, weil etwa dieser Zeitschlitz einen BCCH repräsentiert, so verzweigt das Programm zum Schritt 5. In Schritt 5 sendet die Mobilstation CTS-MS auf dem Zeitschlitz TS1, auf dem die Verbindung mit der ersten Basisstation CTS-FP1 stattfindet, ein Signal zwecks Verbindungsaufnahme mit der anderen zweiten Basisstation CTS-FP2. Für diese Signalisierung werden gestohlene TDMA-Rahmen aus dem Interleaving-Schema der Verbindung zwischen Mobilstation CTS-MS und erster Basisstation CTS-FP1 verwendet. In Schritt 6 wird geprüft, ob die Verbindungsaufnahme erfolgreich verlaufen ist. In diesem Falle war Verbindungsaufnahme erfolgreich und das Programm schreitet weiter zu Schritt 7, in dem über gestohlene TDMA-Rahmen die weitere Signalisierung der Mobilstation CTS-MS zur zweiten Basisstation CTS-FP2 erfolgt. Ist die Verbindungsaufnahme nicht erfolgreich, so verzweigt das Programm von Schritt 6 zurück zu Schritt 2, um erneut zu versuchen, eine Verbindung zu einer anderen Basisstation aufzunehmen.

Nach der Verbindungsaufnahme zur zweiten Basisstation CTS-FP2 (Schritt 4 oder 7) kann von der zweiten Basisstation CTS-FP2 erneut ein anderer Zeitschlitz für die weitere Signalisierung und die Übernahme der Verbindung der Mobilstation CTS-MS mit der ersten Basisstation CTS-FP1 zugewiesen werden.

Bei erfolgreicher Verbindungsaufnahme zur zweiten Basisstation CTS-FP2 kann die Mobilstation CTS-MS dieser zweiten Basisstation eine Kennung übermitteln und anschließend der ersten Basisstation CTS-FP1 die erfolgreiche Verbindungsaufnahme zur zweiten Basisstation CTS-FP2 signalisieren. Die erste Basisstation CTS-FP1 führt daraufhin eine Weiterleitung des Rufs über die Nebenstellenanlage PABX zur zweiten Basisstation CTS-FP2 durch. Dabei wird dieselbe Kennung mit geeigneter Signalisierung der zweiten Basisstation CTS-FP2 übermittelt. Anhand dieser Kennung kann die zweite Basisstation CTS-FP2 die Zugehörigkeit des umgeleiteten Rufs zur Mobilstation CTS-MS überprüfen. Daraufhin wird der Ruf von der Mobilstation CTS-MS über die zweite Basisstation CTS-FP2 zur Nebenstellenanlage PABX durchgeschaltet.

Das oben beschriebene Stehlen von einzelnen TDMA-Rahmen ist unabhängig davon, ob ein Rundspruchsignalisierungskanal (broadcast channel BCCH) verwendet wird oder nicht. Falls jedoch ein BCCH verwendet wird, ist dieser Kanal auf einer festen Funkfrequenz einzurichten; die anderen Kanäle für die Nachrichtenübertragung (traffic channels TCH) sollten entsprechend einem sog. Hopping-Verfahren vorzugweise auf wechselnden Funkfrequenzen eingerichtet werden, um Interferenzen zwischen den CTSen zu vermeiden.

## Patentansprüche

1. Verfahren zur Verbindungsaufnahme in TDMA-basierenden Kommunikationssystemen zwischen einer Mobilstation (CTS-MS), die in Funkverbindung mit einer ersten Basisstation (CTS-FP1) eines ersten schnurlosen Telefonsystems (CTS1) steht, mit einer anderen zweiten Basisstation (CTS-FP2) des gleichen oder eines anderen zweiten schnurlosen Telefonsystems (CTS2), **dadurch gekennzeichnet**, daß von der Mobilstation (CTS-MS) versucht wird, während sie mit der ersten Basisstation (CTS-FP1) auf einem Zeitschlitz (TS1) in Funkverbindung steht, auf mindestens einem anderen Zeitschlitz (TS2) eine Funkverbindung mit der zweiten Basisstation (CTS-FP2) herzustellen.

2. Verfahren nach Anspruch 1, dadurch gekennzeichnet, daß eine Information zwischen der Mobilstation (CTS-MS) und den Basisstationen (CTS-FP1, CTS-FP2) über mehrere TDMA-Rahmen (f1 bis f8) verteilt nach einem vorgebbaren Verschachtelungs-Schema übertragen wird und von der Mobilstation (CTS-MS) zur Verbindungsaufnahme mit der zweiten Basisstation (CTS-FP2) mindestens ein TDMA-Rahmen (f1; f2; f3) des Verschachtelungs-Schemas genutzt wird.

3. Verfahren nach Anspruch 2, dadurch gekennzeichnet, daß die Anzahl der für die Verbindungsaufnahme genutzten TDMA-Rahmen (f1, f2, f3) in Abhängigkeit von der Übertragungsqualität der zwischen Mobilstation (MS) und erster Basisstation (CTS-FP1) bestehenden Funkverbindung bestimmt wird.

4. Verfahren nach Anspruch 2, dadurch gekennzeichnet, daß die Anzahl der für die Verbindungsaufnahme genutzten TDMA-Rahmen (f1, f2, f3) in Abhängigkeit von der Auslastung der zweiten Basisstation (CTS-FP2) bestimmt wird.

5. Verfahren nach Anspruch 1, dadurch gekennzeichnet, daß von der Mobilstation (CTS-MS), falls die Übertragungsqualität der mit der ersten Basisstation (CTS-FP2) bestehenden Funkverbindung abnimmt, selbständig eine Verbindungsaufnahme zu der anderen zweiten Basisstation (CTS-FP2) herzustellen versucht wird.

6. Verfahren nach Anspruch 1, dadurch gekennzeichnet, daß von der Mobilstation (CTS-MS), wenn ein Verbindungswechsel auf die zweite Basisstation (CTS-FP2) erfolgreich war, die Verbindung zu der ersten Basisstation (CTS-FP1) aufgenommen wird, um sich an der ersten Basisstation (CTS-FP1) abzumelden.

7. Verfahren nach Anspruch 1, dadurch gekennzeichnet, daß in dem ersten und in dem zweiten schnurlosen Telefonsystem auf demselben Funkkanal Rundspruchsignale signalisiert werden und daß auf anderen Funkanälen im Frequenz-Sprung-Modus Nachrichten übertragen werden.

8. Mobilstation (CTS-MS) mit einem Programmodul zum Durchführen des Verfahrens nach einem der Ansprüche 1 bis 7.

9. Basisstation (CTS-FP1; CTS-FP2) mit einem Programmodul zum Durchführen des Verfahrens nach einem der Ansprüche 1 bis 7.

10. Schnurloses Telefonsystem (CTS1, CTS2) mit mindestens einer Mobilstation (CTS-MS) nach Anspruch 8 und mit mindestens einer Basisstation (CTS-FP1, CTS-FP2) nach Anspruch 9.
